# EUROPEAN PATENT SPECIFICATION

(11) **EP 3 555 862 B1**
(45) Date of publication and mention of the grant of the patent: **25.03.2020**
(21) Application number: 17817720.0
(22) Date of filing: 12.12.2017
(51) Int. Cl.: G06T 11/20

(54) **A METHOD AND APPARATUS FOR MODIFYING A CONTOUR COMPRISING A SEQUENCE OF POINTS POSITIONED ON AN IMAGE**
VERFAHREN UND VORRICHTUNG ZUR MODIFIZIERUNG EINER KONTUR MIT EINER SEQUENZ VON PUNKTEN, DIE AUF EINEM BILD POSITIONIERT IST
PROCÉDÉ ET APPAREIL PERMETTANT DE MODIFIER UN CONTOUR COMPRENANT UNE SÉQUENCE DE POINTS POSITIONNÉS SUR UNE IMAGE

(30) Priority: 13.12.2016 EP 16203620
(43) Date of publication of application: 23.10.2019
(73) Proprietor: Koninklijke Philips N.V., 5656 AG Eindhoven (NL)
(72) Inventor: VAREKAMP, Christiaan, 5656 AE Eindhoven (NL)
(74) Representative: Philips Intellectual Property & Standards
(86) International application number: PCT/EP2017/082461
(87) International publication number: WO 2018/108933

(56) References cited:
- US-A1- 2016 196 661
- Jason Cranford Teague: "Photoshop 7 at Your Fingertips", , 26 December 2006 (2006-12-26), pages 254-255, XP055373767, Retrieved from the Internet: URL:http://shop.oreilly.com/product/978078 2140927.do [retrieved on 2017-05-17]

## Description

### TECHNICAL FIELD OF THE INVENTION

The invention relates to the field of image analysis (for example, medical image analysis) and, in particular, to a method and apparatus for modifying a contour comprising a sequence of points positioned on an image.

### BACKGROUND TO THE INVENTION

Image analysis can be a useful tool in many situations. For example, medical image analysis is useful for providing information on anatomical structures (such as organs) of a subject that are present in images acquired through medical imaging techniques. The information provided can be used to make clinical findings on the subject and to determine whether medical intervention is necessary. There exist many different types of medical imaging techniques including computed tomography (CT), magnetic resonance (MR), ultrasound (US), X-ray, and similar. Image analysis can also be useful in many other situations.

Often, image analysis involves the placement or drawing of contours on an image to define certain features that are present in the image. The placement or drawing of contours (such as polygons, curves, lines, shapes or similar) is a common task in the annotation of features in images. For example, in the case of a medical image, the contours may define a boundary between different anatomical structures or different parts of an anatomical structure or a region of interest. The contours can provide useful information on digital pathology and thus it is important that the contours are efficiently indicated. In some situations, the contours can be assigned a label that is meaningful in a particular domain (for example, a label such as 'tumour region' may be used in the pathology domain).

Many drawing tools exist with different forms of user interaction to draw contours. One form of drawing contours is called freeform editing. This involves moving the position of a cursor (such as by using a mouse) or finger (such as on a touch screen) to add points to a sequence. Most software that allows the drawing of contours supports freeform editing. Some tools are fully freeform, while other tools smooth the contour shape using for instance splines. There exist methods that allow a user to draw using freeform by placing points on an image. However, according to the existing methods, it is difficult to add and remove points from a sequence. For example, in freeform mode, current methods do not allow erasing of previously drawn points in an easy manner or easy editing of previously drawn contours. The existing methods for drawing freeform contours also do not allow straightforward alternation between adding points and removing points from a contour.

For example, US 2005/0088426 A1 provides a method for erasing a contour in which portions of an ink stroke are erased when an erasing contour contacts the ink stroke. However, this method contains an erase mode only and thus does not allow straightforward switching between add and erase modes. Likewise, US 2016/0196661 A1 teaches erase/add modes for erasing and adding points from/to a contour, respectively.

For example, Jason Cranford Teague ("Photoshop 7 at Your Fingertips", 26 December 2006 (2006-12-26), pages 254-255, XP055373767), provides a method which automatically switches to an Add Anchor Point Tool or to a Delete Anchor Point Tool by placing the pen tool over a line segment or an Anchor point, respectively.

The difficulties with adding and removing points from a contour according to existing methods mean that existing annotation editing tools are inefficient. However, efficient annotation editing tools are important to obtain training samples from images for training machine learning algorithms. Typically, these machine learning algorithms are trained to classify an image region. The training data then consists of contours that are carefully drawn by experts. To maximise the number of annotations on an image, it is important to have efficient tools for drawing.

There is thus a need for an improved method and apparatus for modifying a contour comprising a sequence of points positioned on an image.

### SUMMARY OF THE INVENTION

As noted above, the limitation with existing approaches is that it is difficult to add and remove points from a contour. It would thus be valuable to have a method and apparatus that allows modification of a contour comprising a sequence of points positioned on an image, which overcomes these existing problems.

Therefore, according to a first aspect of the invention, there is provided a method as defined in claim 1, which is a method for modifying a contour comprising a sequence of points positioned on an image. The method comprises detecting a position of a movable indicator on the image relative to one or more points of the sequence, wherein the movable indicator is movable by a user, and automatically removing at least one point from the contour, or adding at least one point to the contour, based on the shortest distance between the detected position of the movable indicator on the image and the one or more points. In other words, at least one point is added automatically to or removed from the contour depending on a computed value of the distance of the detected position from the one or more points. In particular, the decision and/or the execution of automatically adding or removing said at least one point may depend on whether the distance exceeds a threshold distance. Equivalently, the decision and/or execution may depend on whether the value is equal or below the threshold distance. In other words, an erase or add mode is activated for a subsequent operation on the at least one point depending on the computed value of said distance. The automatic activation of the add or remove mode as well as the execution of the desired operation does not require any user interation other than moving the indicator on the screen. For instance, contrary to conventional solutions, a user does for example not need to perform any particular clicks or touches on the screen for switching from one mode to the other and/or causing an execution (add or remove) on the at least one point in accordance with the actived mode (except in ceratin embodiment for creating the very first point of a contour).

In some embodiments, the at least one point may comprise a number of points that is less than a total number of points in the sequence of points.

The method comprises automatically switching between removing at least one point from the contour and adding at least one point to the contour based on the distance of the detected position of the movable indicator on the image from the one or more points.

In some embodiments, removing at least one point from the contour, or adding at least one point to the contour, or as an option removing at least one point from the contour and adding at least one point to the contour, may be based on a shortest distance between the detected position of the movable indicator on the image and the one or more points. In the method, removing at least one point from the contour, or adding at least one point to the contour, is based on whether the shortest distance exceeds a threshold distance.

In the method, at least one point is removed from the contour where the shortest distance is equal to or less than the threshold distance, wherein removing at least one point from the contour comprises removing points from the contour that are positioned in the sequence of points between the detected position of the moveable indicator and the point that is the shortest distance from the detected position of the moveable indicator. In some embodiments, at least one point may be removed only where the at least one point comprises more than a threshold number of points or a length of the contour is more than a threshold length.

In some embodiments, removing at least one point from the contour may comprise determining whether a first part of the sequence of points or a second part of the sequence of points comprises the point that is the shortest distance from the detected position of the moveable indicator and removing points from the part of the contour comprising the point that is the shortest distance from the detected position of the moveable indicator.

In some embodiments, at least one point may be added to the contour at the detected position of the moveable indicator where the shortest distance is more than the threshold distance.

In some embodiments, removing at least one point from the contour may comprise removing points from the contour that are less than a predefined distance from the detected position of the moveable indicator.

In some embodiments, adding at least one point from the contour may comprise adding at least one point to the contour at the detected position of the moveable indicator. In some embodiments, the method may further comprise connecting the at least one added point to a point on the contour that is the shortest distance from the added point.

According to a second aspect of the invention, there is provided a computer program product as defined in claim 10. A computer program product comprises a computer readable medium, the computer readable medium having computer readable code embodied therein, the computer readable code being configured such that, on execution by a suitable computer or processor, the computer or processor is caused to perform the method or the methods described above.

According to a third aspect of the invention, there is provided an apparatus for modifying a contour comprising a sequence of points positioned on an image, as defined in claim 11.

According to the aspects and embodiments described above, the limitations of existing techniques are addressed. In particular, according to the above-described aspects and embodiments, it is possible to easily and efficiently modify (or edit) contours by adding points to the contour, removing points from a contour, or both. Moreover, the above-described aspects and embodiments enable the precise construction and modification of contours positioned in images.

There is thus provided an improved method and apparatus for modifying a contour positioned on an image, which overcomes the existing problems. At least one point is added automatically to or removed from the contour depending on a computed value of the distance of the detected position from the one or more points. In particular, the decision and/or the execution of automatically adding or removing said at least one point may depend on whether the distance exceeds a threshold distance. Equivalently, the decision and/or execution may depend on whether the value is equal or below the threshold distance. In other words, an erase or add mode is activated for a subsequent operation on the at least one point depending on the computed value of said distance. The activation of the add or remove mode as well as the execution of the desired operation does not require any user interation other than moving the indicator on the screen, as it is all automatic. For instance, contrary to conventional solutions, a user does for example not need to perform any particular clicks or touches on the screen for switching from one mode to the other and/or causing an execution (add or remove) on the at least one point in accordance with the actived mode (except in ceratin embodiment for creating the very first point of a contour).

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a block diagram of an apparatus according to an embodiment;
Figure 2 is a flow chart illustrating a method according to an embodiment;
Figure 3 is an illustration of a contour according to an example embodiment;
Figure 4 is an illustration of a contour according to another example embodiment; and
Figure 5 is an illustration of a contour according to another example embodiment.

### DETAILED DESCRIPTION OF THE PREFERRED EMBODIMENTS

As noted above, the invention provides an improved method and apparatus for modifying a contour comprising a sequence of points positioned on an image, which overcomes the existing problems.

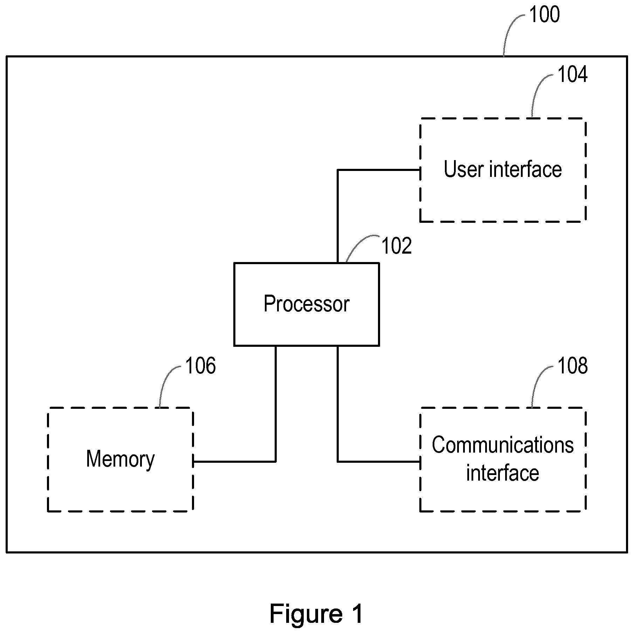

Figure 1 shows a block diagram of an apparatus 100 according to an embodiment that can be used for modifying a contour comprising a sequence of points positioned on an image according to an embodiment.

The image can be any type of image. In one example, the image may be a medical image. Examples of a medical image include, but are not limited to, a computed tomography (CT) image, a magnetic resonance (MR) image, an ultrasound (US) image, an X-ray image, a fluoroscopy image, a positron emission tomography (PET) image, a single photon emission computed tomography (SPECT) image, a nuclear medicine image, or any other medical image. In some embodiments, the image may be an image of an anatomical structure. The anatomical structure in the image may be an organ such as a heart, a lung, an intestine, a kidney, a liver, or any other anatomical structure. The anatomical structure in the image can comprise one or more anatomical parts. For example, images of the heart can comprise a ventricle, an atrium, an aorta, and/or any other part of the heart.

The image can be a two-dimensional images comprising a plurality of pixels or may comprise a plurality of two-dimensional images where each two-dimensional image comprises a plurality of pixels and time is the third dimension (i.e. the image of the anatomical structure may be a 2D+t image), a three-dimensional image comprising a plurality of voxels, a four-dimensional image comprising a plurality (for example, a sequence, such as a time sequence) of three-dimensional images, each three-dimensional image comprising a plurality of voxels. In any of the embodiments, the contour may be indicative of a boundary between different structures in the image, a boundary between different parts of a structure in the image, a region of interest in the image, or similar.

Although examples have been provided for the type of image, it will be understood that the invention may be used for modifying a contour positioned on any type of image.

With reference to Figure 1, the apparatus 100 comprises a processor 102 that controls the operation of the apparatus 100 and that can implement the method described herein. The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method according to embodiments of the invention.

Briefly, the processor 102 is configured to detect a position of a movable indicator on the image relative to one or more points of the sequence. The movable indicator is an indicator that is movable by a user. The processor 102 is also configured to remove at least one point from the contour, add at least one point to the contour, or both (i.e. remove at least one point from the contour and add at least one point to the contour) based on a distance of the detected position of the movable indicator on the image from the one or more points.

In some embodiments, the apparatus 100 may also comprise at least one user interface 104. Alternatively or in addition, at least one user interface 104 may be external to (i.e. separate to or remote from) the apparatus 100. For example, at least one user interface 104 may be part of another device.

A user interface 104 may be for use in providing a user of the apparatus 100 with information resulting from the method according to the invention. The user can be any user of the apparatus 100. For example, where the image is a medical image, the user may be a healthcare provider, a healthcare specialist, a care giver, a subject, or similar. The processor 102 may be configured to control one or more user interfaces 104 to provide information resulting from the method according to the invention. For example, the processor 102 may be configured to control one or more user interfaces 104 to render (or output or display) the image and the contour comprising the sequence of points positioned on the image. The processor 102 may also be configured to control one or more user interfaces 104 to render (or output or display) the movement of the moveable indicator with respect to the contour and the modifications made to the contour as a result of the method disclosed herein. A user interface 104 may, alternatively or in addition, be configured to receive a user input. In other words, a user interface 104 may allow a user of the apparatus 100 to manually enter instructions, data, or information. For example, the user input may comprise the movement of the moveable indicator with respect to the contour. The processor 102 may be configured to acquire the user input from one or more user interfaces 104.

A user interface 104 may be any user interface that enables rendering (or outputting or displaying) of information, data or signals to a user of the apparatus 100. Alternatively or in addition, a user interface 104 may be any user interface that enables a user of the apparatus 100 to provide a user input, interact with and/or control the apparatus 100. For example, the user interface 104 may comprise one or more switches, one or more buttons, a keypad, a keyboard, a mouse, a trackball, a touch pad, a touch screen or an application (for example, on a smart device such as a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, the user interface that is controlled to render (or output or display) information, data or signals to the user of the apparatus 100 may be the same user interface as that which enables the user to provide a user input, interact with and/or control the apparatus 100. For example, the user interface may be a touch screen that is controllable to display the image, the contour positioned on the image, and the moveable indicator, and that is operable to receive user input to move the moveable indicator by way of gestures applied to the touch screen (for example, by a finger of the user, a stylus, or similar). In other embodiments, the user interface that is controlled to render (or output or display) information, data or signals to the user of the apparatus 100 may be a different user interface to that which enables the user to provide a user input, interact with and/or control the apparatus 100. For example, a display screen may be controllable to display the image, the contour positioned on the image, and the moveable indicator, and an input device (such as a mouse, a trackball, a keypad, a touch pad, or any other input device) may be operable to receive user input to move the moveable indicator on the display screen.

In some embodiments, the apparatus 100 may also comprise a memory 106 configured to store program code that can be executed by the processor 102 to perform the method described herein. Alternatively or in addition, one or more memories 106 may be external to (i.e. separate to or remote from) the apparatus 100. For example, one or more memories 106 may be part of another device. A memory 106 can be used to store images, information, data, signals and measurements acquired or made by the processor 102 of the apparatus 100 or from any interfaces, memories or devices that are external to the apparatus 100. For example, a memory 106 may be used to store any one or more of the image, the contour positioned on the image (which may be before modification of the contour, after one or more modifications to the contour, or both), or any other information resulting from the method disclosed herein. The processor 102 may be configured to control a memory 106 to store the information resulting from the method disclosed herein.

In some embodiments, the apparatus 100 may also comprise a communications interface (or circuitry) 108 for enabling the apparatus 100 to communicate with any interfaces, memories and devices that are internal or external to the apparatus 100. The communications interface 108 may communicate with any interfaces, memories and devices wirelessly or via a wired connection. For example, in an embodiment where one or more user interfaces 104 are external to the apparatus 100, the communications interface 108 may communicate with the one or more external user interfaces 104 wirelessly or via a wired connection. Similarly, in an embodiment where one or more memories 106 are external to the apparatus 100, the communications interface 108 may communicate with the one or more external memories 106 wirelessly or via a wired connection.

It will be appreciated that Figure 1 only shows the components required to illustrate this aspect of the invention, and in a practical implementation the apparatus 100 may comprise additional components to those shown. For example, the apparatus 100 may comprise a battery or other power supply for powering the apparatus 100 or means for connecting the apparatus 100 to a mains power supply.

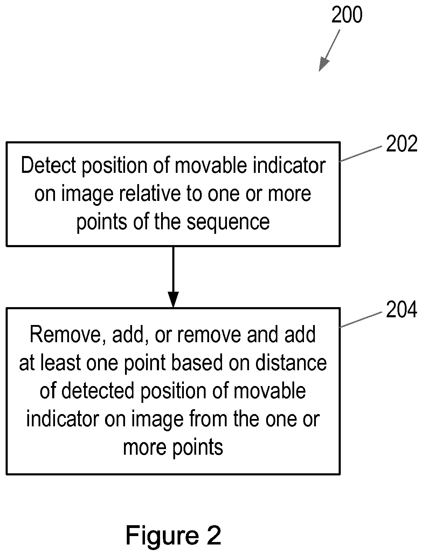

Figure 2 illustrates a method 200 for modifying a contour according to an embodiment. The illustrated method 200 can generally be performed by or under the control of the processor 102 of the apparatus 100.

Although not illustrated in Figure 2, an image may be rendered (or output or displayed) to the user through a user interface such as those described earlier. In this way, the user can view the image to modify a contour positioned on the image. A contour comprises a sequence (or series) of points positioned on the image. The sequence of points can be an ordered sequence from the start of the contour to the end of the contour. The contour can take any form and may, for example, comprise any one or more of polygons, curves, lines, shapes or similar. In some embodiments, each point in the sequence of points may be connected to the next point in the sequence by a line segment. However, while examples have been provided for the form of the contour, it will be understood that any other form of contour is possible.

Although also not illustrated in Figure 2, the method may comprise the initial positioning of the contour on the image. In some embodiments, the initial positioning of the contour on the image may comprise the user initially positioning the contour on the image by way of a user interface such as those described earlier. For example, the initial positioning of the contour on the image may comprise the user drawing the contour on the image, or applying (or introducing) a contour retrieved from a memory to the image. In other embodiments, the initial positioning of the contour on the image may comprise the processor 102 of the apparatus 100 initially positioning a contour on the image for subsequent modification by the user. For example, the processor 102 may be configured to detect one or more features (such as a boundary, a region of interest, or any other feature) in the image and position the contour on the image with respect to the detected features.

The contour comprising the sequence of points positioned on the image can then be modified by the user. The contour can be modified through movement of the moveable indicator. In particular, by just moving the indicator over the image, the contour is automatically modified by removing (or erasing) at least one point from the contour, adding at least one point to the contour, or both (i.e. removing at least one point from the contour and adding at least one point to the contour). Where at least one point is added to the contour, the at least one point may be added at the detected position of the moveable indicator. The spacing between the points that are added to the contour can, in some embodiments, depend on the speed at which a moveable indicator is moved to position the contour in the image. For example, moving the moveable indicator at a faster speed can result in less points being added to the contour than moving the moveable indicator at a slower speed.

As previously mentioned, the movable indicator can be moved by the user using a user interface such as those described earlier. In some embodiments, the moveable indicator may comprise a cursor moveable by a user. For example, the moveable cursor may be moveable by the user via a pointing device (such as keypad, mouse, trackball, touch pad, or any other pointing device). In other embodiments, the user interface may comprise a touch screen and the moveable indicator may comprise a gesture applied to the touch screen by the user. For example, the gesture may comprise a finger of the user or a stylus moveable by a user moving on a touch screen.

Thus, only through movement of the moveable indicator, the contour comprising the sequence of points positioned on the image can be modified by the user. With reference to Figure 2, at block 202, a position of a movable indicator on the image relative to one or more points of the sequence is first detected. The position of the movable indicator is the position of the movable indicator on the user interface (for example, the display screen) that is rendering (or outputting or displaying) the image.

At block 204, at least one point is automatically removed (or erased) from the contour, at least one point is automatically added to the contour, or at least one point is automatically removed (or erased) from the contour and at least one point is added to the contour based on a distance of the detected position of the movable indicator on the image from the one or more points. Thus, the automatic decision and execution to add one or more new points to the contour, remove one or more existing points from the contour or both add one or more new points to the contour and remove one or more existing points to the contour (or said differently the selection of the active mode and the actual execution on points) depends on the distance of the detected position of the movable indicator on the image from (or with respect to) the one or more points that are already present in the sequence of points of the contour. The contour comprising the sequence of points positioned on the image can therefore be modified in this way. In some embodiments, a new point may be automatically added to the contour only when motion of the moveable indicator is detected.

In any of the embodiments described herein, the method can comprise automatically switching between removing at least one point from the contour and adding at least one point to the contour, based on the distance of the detected position of the movable indicator on the image from the one or more points. Thus, based on the current location of the moveable indicator to the contour with respect to points already on the contour, the processor 102 of the apparatus 100 can be configured to switch between adding one or more new points to the contour and removing one or more existing points from the contour. This allows efficient and precise construction and editing of contours (for example, contours comprising certain shapes).

In any of the embodiments described herein, the at least one point that is automatically added to the contour or the at least one point that is removed from the contour comprises a number of points that is less than a total number of points in the sequence of points. In the case of removing at least one point from the contour, this means that at least some of the points in the sequence of points are maintained. In other words, only part of the contour is erased.

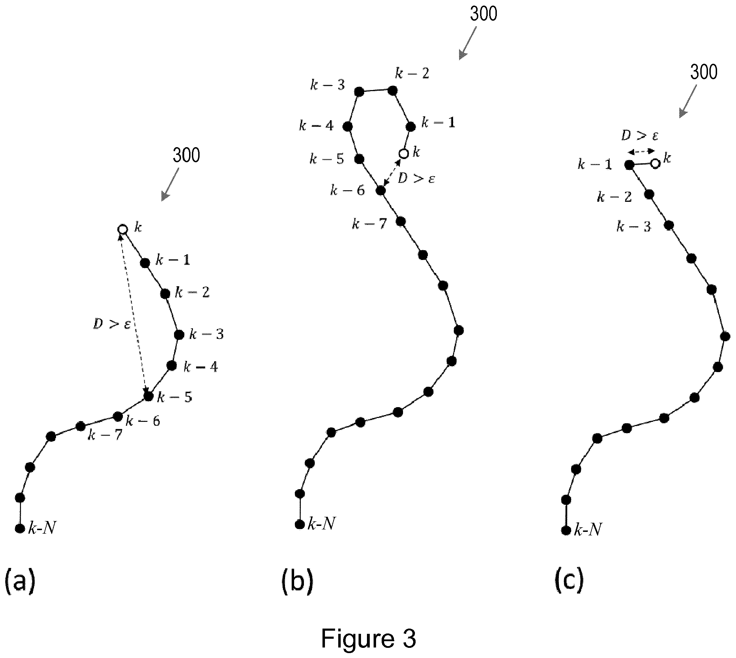

Figure 3 is an illustration of a contour 300 according to an example embodiment.

As illustrated in the example embodiment of Figure 3, a contour 300 comprising a sequence of points *k* - *N* to *k* - 1 is positioned on an image (which is not illustrated), where N is the total number of points in the sequence. In this example embodiment, each point *k* - 1 to *k* - *N* in the sequence of points is connected to the next point in the sequence by a line segment. For example, the point *k* -1 is connected to the point *k* - 2, the point *k -* 2 is connected to the point *k* - 3 , and so on up to the last point in the sequence *k* - *N.* The initial positioning of the contour 300 on the image may be performed in any of the manners described earlier.

The contour 300 comprising the sequence of points positioned on the image is then modified by the user through movement of the moveable indicator, as described earlier with reference to Figure 2. Specifically, as described earlier with reference to Figure 2, a position of the movable indicator on the image relative to one or more points of the sequence is detected (block 202 of Figure 2) and at least one point is removed from the contour 300, at least one point is added to the contour 300, or at least one point is removed from the contour 300 and at least one point is added to the contour 300 based on a distance of the detected position of the movable indicator on the image from the one or more points (block 204 of Figure 2). No other user interaction than the movement is needed, which makes the method fully automatic.

In the example embodiment of Figure 3, automatically removing at least one point from the contour 300, adding at least one point to the contour 300, or removing at least one point from the contour 300 and adding at least one point to the contour 300 is based on a shortest distance *D* between the detected position of the movable indicator on the image and the one or more points. For example, in some embodiments, removing at least one point from the contour 300, adding at least one point to the contour 300, or both (i.e. removing at least one point from the contour 300 and adding at least one point to the contour 300) is based on whether the shortest distance *D* exceeds a threshold distance *ε*. The threshold distance *ε* may be a user configurable parameter.

Where the shortest distance *D* is more than the threshold distance *ε* (i.e. where *D* > *ε*), at least one point is added to the contour 300 at the detected position of the moveable indicator. Where the shortest distance *D* is equal to or less than the threshold distance *ε* (i.e. where *D* ≤ *ε*), at least one point is removed from the contour 300. In this case, at least one point may also be added to the contour 300 at the detected position of the moveable indicator. In addition, in some embodiments, the at least one added point may be connected to a point on the contour 300 that is the shortest distance from the added point.

In the example illustrated in Figure 3, the automaticremoval of at least one point from the contour 300 comprises removing points from the contour 300 that are positioned in the sequence of points between the detected position of the moveable indicator and the point that is the shortest distance *D* from the detected position of the moveable indicator. In some embodiments, at least one point is removed only where the at least one point comprises more than a threshold number of points or a length of the contour 300 (for example, a sum of the length of line segments that connect the sequence of points of the contour) is more than a threshold length.

In the example illustrated in Figure 3, the distance of the movable indicator on the image to one or more points in a part of the contour 300 is determined to find the shortest distance *D* between the detected position of the movable indicator on the image and the one or more points in that part of the contour 300. Specifically, the distance of the movable indicator on the image to each of the points *k* - *N* to *k* - 5 is determined to find the shortest distance *D* between the detected position of the movable indicator on the image and those points. The last *m* points in the sequence of points of the contour 300 are not taken into consideration to avoid removing the last points in the sequence. In the illustrated example, the value of *m* is set to 5. However, it will be understood that the value of *m* may be set to any other integer number that is less than the total number of points *N*.

In the illustrated example of Figure 3(a), the shortest distance *D* is between the detected position of the movable indicator on the image and the point *k* - 5. As the shortest distance *D* between the detected position of the movable indicator on the image and the points *k* - *N* to *k* - 5 is more than the threshold distance *ε* (i.e. as *D* > *ε*), a point *k* is added to the contour 300 at the detected position of the moveable indicator. The added point *k* is connected to the point *k* -1, which is the point on the contour 300 that is the shortest distance from the added point *k.* In other words, a new connection is made to connect the point *k* to the remainder of the contour 300.

Similarly, in the example illustrated in Figure 3(b), although the length of the contour 300 has grown over time following the addition of more points and the contour 300 has also made a steep turn, another point *k* is still added to the contour 300 at the current detected position of the moveable indicator on the image since the shortest distance *D* between the detected position of the movable indicator and the points *k* - *N* to *k* - 5 is more than the threshold distance *ε* (i.e. since *D* > *ε*). In the illustrated example of Figure 3(b), the shortest distance *D* is between the detected position of the movable indicator on the image and the point *k -* 6. The added point *k* is connected to the point *k* -1, which is the point on the contour 300 that is the shortest distance from the added point *k.* In other words, a new connection is made to connect the point *k* to the remainder of the contour 300.

In the example illustrated in Figure 3(c), the shortest distance shortest distance *D* between the detected position of the movable indicator and the points *k* - *N* to *k* - 5 is equal to or less than the threshold distance *ε* (i.e. *D* ≤ *ε*). As such, all of the points that are positioned in the sequence of points between the detected position of the moveable indicator (or from the end of the contour 300) and the point that is the shortest distance *D* from the detected position of the moveable indicator (or the point at which the minimum distance to the detected position of the moveable indicator is reached) are removed from the contour 300. As illustrated in Figure 3(c), the remaining points in the sequence then become points *k* - *N* to *k* -1. In this illustrated example, a point *k* is also added to the contour 300 at the detected position of the moveable indicator. The added point *k* is connected to the point *k -* 1, which is the point on the contour 300 that is the shortest distance from the added point *k.* In other words, a new connection is made to connect the point *k* to the remainder of the contour 300.

The example of Figure 3 illustrates the automatic switching between adding points to the contour 300 and removing points from the contour 300 on the basis of the current position of the moveable indicator and the shortest distance of the position of the moveable indicator to points on the contour 300.

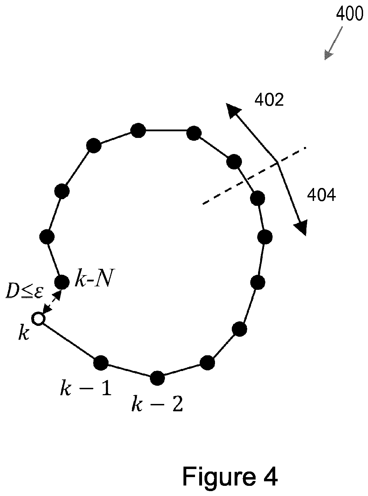

Figure 4 is an illustration of a contour 400 according to another example embodiment.

As illustrated in the example embodiment of Figure 4, a contour 400 comprising a sequence of points *k* - *N* to *k* - 1 is positioned on an image (which is not illustrated), where *N* is the total number of points in the sequence. In this example embodiment, each point *k* - 1 to *k* - *N* in the sequence of points is connected to the next point in the sequence by a line segment. For example, the point *k* -1 is connected to the point *k* - 2, the point *k -* 2 is connected to the point *k* - 3 , and so on up to the last point in the sequence *k* - *N.* The initial positioning of the contour 400 on the image may be performed in any of the manners described earlier.

The contour 400 comprising the sequence of points positioned on the image is then modified by the user by only moving the moveable indicator, as described earlier with reference to Figure 2. Specifically, as described earlier with reference to Figure 2, a position of the movable indicator on the image relative to one or more points of the sequence is detected (block 202 of Figure 2) and automatically at least one point is removed from the contour 400, at least one point is added to the contour 400, or, as an option, at least one point is removed from the contour 400 and at least one point is added to the contour 400 based on a distance of the detected position of the movable indicator on the image from the one or more points (block 204 of Figure 2).

In the example embodiment of Figure 4, removing at least one point from the contour 400, adding at least one point to the contour 400, or, as an option, removing at least one point from the contour 400 and adding at least one point to the contour 400 is based on a shortest distance *D* between the detected position of the movable indicator on the image and the one or more points. For example, in some embodiments, removing at least one point from the contour 400, adding at least one point to the contour 400, or both as an option (i.e. removing at least one point from the contour 400 and adding at least one point to the contour 400) is based on whether the shortest distance *D* exceeds a threshold distance *ε*. The threshold distance *ε* may be a user configurable parameter.

Where the shortest distance *D* is more than the threshold distance *ε* (i.e. where *D* > *ε*), at least one point is automatically added to the contour 400 at the detected position of the moveable indicator. Where the shortest distance *D* is equal to or less than the threshold distance *ε* (i.e. where *D* ≤ *ε*), at least one point is automatically removed from the contour 400. In this case, at least one point may also be added automatically to the contour 400 at the detected position of the moveable indicator. In addition, in some embodiments, the at least one added point may be automatically connected to a point on the contour 400 that is the shortest distance from the added point.

In the example illustrated in Figure 4, the distance of the movable indicator on the image to one or more points in a part of the contour 400 is determined to find the shortest distance *D* between the detected position of the movable indicator on the image and the one or more points in that part of the contour 400. In the illustrated example, this shortest distance *D* is between the detected position of the movable indicator on the image and the point *k* - *N.* The shortest distance shortest distance *D* is equal to or less than the threshold distance *ε* (i.e. *D* ≤ *ε*). This means that at least one point is automatically removed from the contour 400.

In order to determine from which end to remove the at least one point from the contour 400 in the illustrated example of Figure 4, it is determined whether a first part of the sequence of points or a second part of the sequence of points comprises the point that is the shortest distance from the detected position of the moveable indicator. Then, points are removed from the part of the contour 400 comprising the point that is the shortest distance from the detected position of the moveable indicator. In this illustrated example, it is determined whether the first half 402 of the sequence of points or the second half 404 of the sequence of points comprises the point that is the shortest distance from the detected position of the moveable indicator. The first half 402 and the second half 404 of the contour 400 may be defined by determining the position on the contour 400 that is in the middle of (i.e. halfway along) the length of the contour 400. As the first half 402 of the sequence of points is determined to comprise the point that is the shortest distance from the detected position of the moveable indicator, although not illustrated in Figure 4, points are automatically removed from the first half of the contour 400. Specifically, points are removed from the start of the sequence in the first half of the contour 400. In some embodiments, points may be automatically removed one at a time from the start of the sequence in the first half of the contour 400 as the moveable indicator is moved closer to the start of the sequence in the first half of the contour 400.

In the illustrated example of Figure 4, a point *k* is also added automatically to the contour 400 at the detected position of the moveable indicator. The added point *k* is connected to the point *k* -1, which is the point on the contour 400 that is the shortest distance from the added point *k* once points are removed from the start of the first half 401 of the sequence of points on the contour 400. In other words, a new connection is automatically made to connect the point *k* to the remainder of the contour 400. The content in points of the first half of the sequence is udpated dynamically while such operation is carried out.

All in all, it may be considered that, in this particular situation illustrated in Figure 4, where the indicator is near the first half of the sequence, a point has been removed and a point has been added. These two operations may be performed simultaneously typically if the method is implemented based on parallel processing. Thus, in embodiments, while the indicator is moved towards the first half 402 of the sequence of points and reaches a threshold distance to (e.g.) point k-N, point k-N is automatically removed from the contour and - simultaneoulsy or briefly after but still at the deteted position - a new point k is automatically added to the contour. The result of this operation may also be viewed as automatically replacing the spatial location of point k-N in the first half of the sequence by a new point k closer to the end of the sequence, by just continuing moving the indicator. In this way, it is for example possible to automatically adjust the location(s) of the continously-updated first half of the contour by just moving the indicator at ajusted positions.

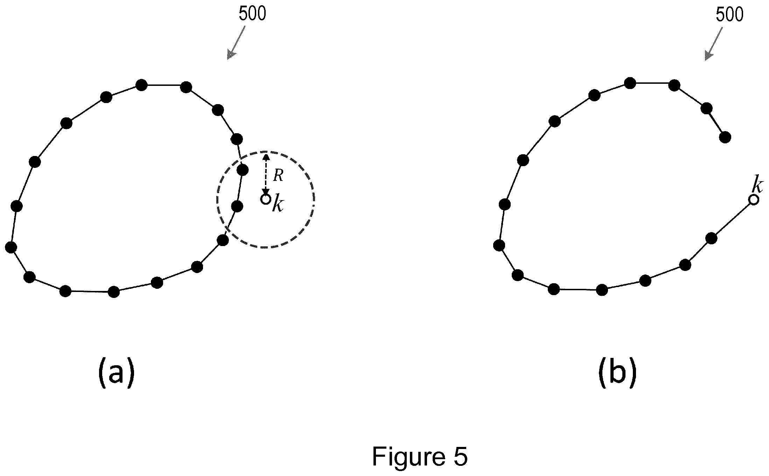

Figure 5 is an illustration of a contour 500 according to another example embodiment.

The contour 500 in the illustrated example of Figure 5 is a closed contour in that the contour comprises a closed shape or polygon. The contour 500 comprises a sequence of points positioned on an image (which is not illustrated). In this example embodiment, each point in the sequence of points is connected to the next point in the sequence by a line segment. The initial positioning of the contour 500 on the image may be performed in any of the manners described earlier.

The contour 500 comprising the sequence of points positioned on the image is modified by the user through movement of the moveable indicator only, as described earlier with reference to Figure 2. Specifically, as described earlier with reference to Figure 2, a position of the movable indicator on the image relative to one or more points of the sequence is detected (block 202 of Figure 2) and automatically at least one point is removed from the contour 500, at least one point is added to the contour 500, or at least one point is removed from the contour 500 and at least one point is added to the contour 500 based on a distance of the detected position of the movable indicator on the image from the one or more points (block 204 of Figure 2). In the illustrated example of Figure 5, where at least one point is added to the contour 500, the at least one point is added to the contour 500 at the detected position of the moveable indicator. In addition, in some embodiments, the at least one added point may be automatically connected to a point on the contour 500 that is the shortest distance from the added point.

As illustrated in Figure 5, according to this example embodiment, automatically removing at least one point from the contour 500 is based on whether points in the sequence are less than a predefined distance away from the detected position of the movable indicator. More specifically, removing at least one point from the contour 500 is based on whether points in the sequence fall within a predefined radius *R* of (or are less than a predefined radial distance away from) the detected position of the movable indicator. In particular, removing at least one point from the contour 500 comprises removing points from the contour 500 that are less than the predefined distance from (or, more specifically, less than the predefined radius *R* from or less than the predefined radial distance away from) the detected position of the moveable indicator. Thus, where the moveable indicator is placed closer than the predefined distance from (or, more specifically, closer than the predefined radius R from or less than the predefined radial distance away from) one or more points on the contour 500, the closed contour 500 is automatically opened through the removal of the one or more points, as illustrated in Figure 5(b). Where multiple contours are positioned in the image, the contour that is closest to the detected position of the moveable indicator can be automatically opened in this way.

As also illustrated in Figure 5(b), in addition to the removal of points in this illustrated example, a point *k* is automatically added to the contour 500 at the detected position of the moveable indicator. The added point *k* is connected to the point on the contour 500 that is the shortest distance from the added point *k.* In other words, a new connection is automatically made to connect the point *k* to the remainder of the contour 500. In this way, the point *k* is added to the closest end of the opened part of the contour 500.

There is therefore provided an improved method and apparatus for automatically modifying a contour comprising a sequence of points positioned on an image. The method and apparatus described herein can be used for modifying contours in any arbitrary image (for example, a medical image of an anatomical structure, or any other type of image). The method and apparatus can be valuable in imaging analysis and visualisation tools.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention.

It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims.

For instance, the skilled person in the art will celarly understand that the invention encompasses a method, program and apparatus to create a new contour. Thus, all the embodiments described previously may be used after an initial (starting) point for such a new contour has been positioned. For this initial positioning, any kinf of user interaction event may be selected for the purspoe of detecting where to position this first point, for instance an intial click or the intial touch with the finger on the screen may be used for such a detection. Obviously the finalization of the contour may be also be done by detecting a predefined interaction event, like positioning the final point by clicking a second time or by stopping touching the screen with the finger. It will be noted that with such method the interaction remains very simple and very efficient.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for modifying a contour (300, 400, 500) comprising a sequence of points positioned on an image, the method comprising:
detecting a position of a movable indicator on the image relative to one or more points of the sequence (202), wherein the movable indicator is movable by a user;
automatically removing at least one point from the contour (300, 400, 500), or adding at least one point to the contour (300, 400, 500), based on the shortest distance between the detected position of the movable indicator on the image and the one or more points (204); and automatically switching between removing at least one point from the contour and adding at least one point to the contour, based on the distance of the detected position of the movable indicator on the image from the one or more points, wherein removing at least one point from the contour (300, 400), or adding at least one point to the contour (300, 400), is based on whether the shortest distance exceeds a threshold distance, wherein at least one point is removed from the contour (300, 400) where the shortest distance is equal to or less than the threshold distance, and wherein removing at least one point from the contour comprises removing points from the contour that are positioned in the sequence of points between the detected position of the moveable indicator and the point that is the shortest distance from the detected position of the moveable indicator.

2. A method as claimed in claim 1, wherein the at least one point comprises a number of points that is less than a total number of points in the sequence of points.

3. A method as claimed in any one of claims 1 or 2, wherein at least one point is removed only where the at least one point comprises more than a threshold number of points or a length of the contour (300) is more than a threshold length.

4. A method as claimed in claim 1 or 2, wherein removing at least one point from the contour (400) comprises:
determining whether a first part (402) of the sequence of points or a second part (404) of the sequence of points comprises the point that is the shortest distance from the detected position of the moveable indicator; and
removing points from the part of the contour (400) comprising the point that is the shortest distance from the detected position of the moveable indicator.

5. A method as claimed in any one of claims 1, 2, 3, or 4, wherein at least one point is added to the contour (300, 400) at the detected position of the moveable indicator where the shortest distance is more than the threshold distance.

6. A method as claimed in any one of claims 1, or 2, wherein removing at least one point from the contour (500) comprises:
removing points from the contour (500) that are less than a predefined distance from the detected position of the moveable indicator.

7. A method as claimed in any one of claims 1, 2, or 6, wherein adding at least one point from the contour (300, 400, 500) comprises:
adding at least one point to the contour (300, 400, 500) at the detected position of the moveable indicator.

8. A method as claimed in any one of claims 5 or 7, the method further comprising:
connecting the at least one added point to a point on the contour that is the shortest distance from the added point.

9. A method for creating a contour (300, 400, 500) comprising a sequence of points to be positioned on an image, the method comprising:
- generating a first interaction event to position in the image an initial point for the sequence,
- carrying out the method of modifying a contour according to any of the preceding claims, and
- generating a second interaction event to position a final point for the sequence in the image, thereby finalizing the contour.

10. A computer program product comprising a computer readable medium, the computer readable medium having computer readable code embodied therein, the computer readable code being configured such that, on execution by a suitable computer or processor, the computer or processor is caused to perform the method of any one of claims 1-9.

11. An apparatus (100) for modifying a contour (300, 400, 500) comprising a sequence of points positioned on an image, the apparatus comprising:
a processor (102) configured to:
detect a position of a movable indicator on the image relative to one or more points of the sequence, wherein the movable indicator is movable by a user;
automatically remove at least one point from the contour (300, 400, 500), or add at least one point to the contour (300, 400, 500), based on the shortest distance between the detected position of the movable indicator on the image and the one or more points; and
automatically switch between removing at least one point from the contour (300, 400, 500) and adding at least one point to the contour, based on the shortest distance of the detected position of the movable indicator on the image from the one or more points; wherein removing at least one point from the contour (300, 400), or adding at least one point to the contour (300, 400), is based on whether the shortest distance exceeds a threshold distance, wherein at least one point is removed from the contour (300, 400) where the shortest distance is equal to or less than the threshold distance, and wherein removing at least one point from the contour comprises removing points from the contour that are positioned in the sequence of points between the detected position of the moveable indicator and the point that is the shortest distance from the detected position of the moveable indicator.

## Patentansprüche

1. Verfahren zum Modifizieren einer Kontur (300, 400, 500), die eine Folge von Punkten umfasst, die auf einem Bild positioniert sind, wobei das Verfahren Folgendes umfasst:
Erfassung einer Position eines beweglichen Indikators auf dem Bild relativ zu einem oder mehreren Punkten der Folge (202), wobei der bewegliche Indikator von einem Benutzer bewegt werden kann;
Automatisches Entfernen mindestens eines Punktes von der Kontur (300, 400, 500) oder Hinzufügen mindestens eines Punktes zur Kontur (300, 400, 500), basierend auf dem kürzesten Abstand zwischen der erfassten Position des beweglichen Indikators auf dem Bild und dem einen oder der mehreren Punkte (204); und
automatisches Umschalten zwischen dem Entfernen mindestens eines Punkts von der Kontur und dem Hinzufügen mindestens eines Punkts zur Kontur auf Grundlage des Abstands der erfassten Position des beweglichen Indikators auf dem Bild von dem einen oder den mehreren Punkten, wobei das Entfernen mindestens eines Punkt von der Kontur (300, 400) oder das Hinzufügen mindestens eines Punktes zur Kontur (300, 400) darauf basiert, ob der kürzeste Abstand einen Schwellenwert-Abstand überschreitet,
wobei mindestens ein Punkt dort von der Kontur (300, 400) entfernt wird, wo der kürzeste Abstand gleich oder kleiner als der Schwellenwert-Abstand ist, und wobei das Entfernen von mindestens einem Punkt von der Kontur das Entfernen von Punkten von der Kontur umfasst, die in der Folge von Punkten zwischen der erfassten Position des beweglichen Indikators und des Punktes, der die kürzeste Entfernung von der erfassten Position des beweglichen Indikators hat, positioniert sind.

2. Verfahren nach Anspruch 1, wobei der mindestens eine Punkt eine Anzahl von Punkten umfasst, die kleiner als eine Gesamtanzahl von Punkten in der Folge von Punkten ist.

3. Verfahren nach einem der Ansprüche 1 oder 2, wobei mindestens ein Punkt nur dort entfernt wird, wo der mindestens eine Punkt mehr als eine Schwellenwert-Anzahl von Punkten umfasst oder eine Länge der Kontur (300) mehr als eine Schwellenwert-Länge beträgt.

4. Verfahren nach Anspruch 1 oder 2, wobei das Entfernen mindestens eines Punktes von der Kontur (400) Folgendes umfasst:
Bestimmen, ob ein erster Teil (402) der Folge von Punkten oder ein zweiter Teil (404) der Folge von Punkten den Punkt umfasst, der den kürzesten Abstand von der erfassten Position des beweglichen Indikators hat; und
Entfernung von Punkten von demjenigen Teil der Kontur (400), der den Punkt umfasst, der die kürzeste Entfernung von der erfassten Position des beweglichen Indikators hat.

5. Verfahren nach einem der Ansprüche 1, 2, 3 oder 4, wobei mindestens ein Punkt dort zur Kontur (300, 400) an der erfassten Position des beweglichen Indikators hinzugefügt wird, wo der kürzeste Abstand größer als der Schwellenwert-Abstand ist.

6. Verfahren nach einem der Ansprüche 1 oder 2, wobei die Entfernung mindestens eines Punktes von der Kontur (500) Folgendes umfasst:
Entfernung von Punkten von der Kontur (500), die weniger als ein vordefinierter Abstand von der erfassten Position des beweglichen Indikators entfernt sind.

7. Verfahren nach einem der Ansprüche 1, 2 oder 6, wobei das Hinzufügen von mindestens einem Punkt der Kontur (300, 400, 500) Folgendes umfasst:
Hinzufügen mindestens eines Punktes zur Kontur (300, 400, 500) an der erfassten Position des beweglichen Indikators.

8. Verfahren nach einem der Ansprüche 5 oder 7, wobei das Verfahren ferner Folgendes umfasst:
Verbinden des mindestens einen hinzugefügten Punktes mit einem Punkt auf der Kontur, der den kürzesten Abstand zum hinzugefügten Punkt hat.

9. Verfahren zum Erzeugen einer Kontur (300, 400, 500), die eine Folge von Punkten umfasst, die auf einem Bild positioniert werden sollen, wobei das Verfahren Folgendes umfasst:
- Erzeugen eines ersten Interaktions-Ereignisses, um einen Anfangspunkt für die Folge in dem Bild zu positionieren,
- Ausführen des Verfahrens zum Modifizieren einer Kontur nach einem der vorhergehenden Ansprüche, und
- Erzeugen eines zweiten Interaktions-Ereignisses, um einen Endpunkt für die
Folge im Bild zu positionieren, wodurch die Kontur fertiggestellt wird.

10. Computerprogramm-Produkt, das ein computerlesbares Medium umfasst, wobei das computerlesbare Medium einen darin enthaltenen computerlesbaren Code aufweist, wobei der computerlesbare Code so gestaltet ist, dass bei der Ausführung durch einen geeigneten Computer oder Prozessor der Computer oder Prozessor veranlasst wird, das Verfahren nach einem der Ansprüche 1-9 auszuführen.

11. Eine Vorrichtung (100) zum Modifizieren einer Kontur (300, 400, 500), die eine Folge von Punkten umfasst, die auf einem Bild positioniert sind, wobei die Vorrichtung Folgendes umfasst:
Einen Prozessor (102), der zu Folgendem konfiguriert ist:
Erfassung einer Position eines beweglichen Indikators auf dem Bild relativ zu einem oder mehreren Punkten der Folge, wobei der bewegliche Indikator von einem Benutzer bewegt werden kann;
Automatisches Entfernen mindestens eines Punktes von der Kontur (300, 400, 500) oder Hinzufügen mindestens eines Punktes zur Kontur (300, 400, 500), basierend auf dem kürzesten Abstand zwischen der erfassten Position des beweglichen Indikators auf dem Bild und dem einen oder der mehreren Punkte; und
automatisches Umschalten zwischen dem Entfernen mindestens eines Punktes von der Kontur und dem Hinzufügen mindestens eines Punkts zur Kontur auf Grundlage des Abstands der erfassten Position
des beweglichen Indikators auf dem Bild von dem einen oder den mehreren Punkten, wobei das Entfernen mindestens eines Punkt von der Kontur oder das Hinzufügen mindestens eines Punktes zur Kontur (300, 400) darauf basiert, ob der kürzeste Abstand einen Schwellenwert-Abstand überschreitet,
wobei mindestens ein Punkt dort von der Kontur (300, 400) entfernt wird, wo der kürzeste Abstand gleich oder kleiner als der Schwellenwert-Abstand ist, und wobei das Entfernen von mindestens einem Punkt von der Kontur das Entfernen von Punkten von der Kontur umfasst, die in der Folge von Punkten zwischen der erfassten Position des beweglichen Indikators und des Punktes, der die kürzeste Entfernung von der erfassten Position des beweglichen Indikators hat, positioniert sind.

## Revendications

1. Procédé de modification d'un contour (300, 400, 500) comprenant une séquence de points positionnés sur une image, ledit procédé comprenant :
la détection d'une position d'un indicateur mobile sur l'image par rapport à un ou plusieurs points de la séquence (202), dans laquelle l'indicateur mobile peut être déplacé par un utilisateur ;
la suppression automatique d'au moins un point du contour (300, 400, 500) ou l'ajout d'au moins un point au contour (300, 400, 500), en fonction de la distance la plus courte entre la position détectée de l'indicateur mobile sur l'image et le ou les points (204) ; et le basculement automatique entre la suppression d''au moins un point du contour et l'ajout d'au moins un point au contour, en fonction de la distance de la position détectée de l'indicateur mobile sur l'image d'un ou plusieurs points, dans laquelle la suppression d'au moins un point du contour (300, 400) ou l'ajout d'au moins un point au contour (300, 400) est basé sur le fait que la distance la plus courte dépasse une distance seuil, dans laquelle au moins un point est supprimé du contour (300, 400) où la distance la plus courte est égale ou inférieure à la distance seuil, et
dans laquelle la suppression d'au moins un point du contour comprend la suppression des points du contour, lesquels sont positionnés dans la séquence de points entre la position détectée de l'indicateur mobile et le point, laquelle est la distance la plus courte de la position détectée de l'indicateur mobile.

2. Procédé selon la revendication 1, dans lequel l'au moins un point comprend un nombre de points inférieur à un nombre total de points dans la séquence de points.

3. Procédé selon l'une quelconque des revendications 1 ou 2, dans lequel au moins un point est supprimé uniquement lorsque l'au moins un point comprend plus d'un nombre seuil de points ou une longueur du contour (300) est supérieure à une longueur seuil.

4. Procédé selon la revendication 1 ou 2, dans lequel la suppression d'au moins un point du contour (400) comprend :
la détermination si une première partie (402) de la séquence de points ou une deuxième partie (404) de la séquence de points comprend le point, lequel est la distance la plus courte de la position détectée de l'indicateur mobile ; et
la suppression des points de la partie du contour (400) comprenant le point, lequel est la distance la plus courte de la position détectée de l'indicateur mobile.

5. Procédé selon l'une quelconque des revendications 1, 2, 3 ou 4, dans lequel au moins un point est ajouté au contour (300, 400) à la position détectée de l'indicateur mobile où la distance la plus courte est supérieure à la distance seuil.

6. Procédé selon l'une quelconque des revendications 1 ou 2, dans lequel la suppression d'au moins un point du contour (500) comprend :
la suppression des points du contour (500) inférieurs à une distance prédéfinie de la position détectée de l'indicateur mobile.

7. Procédé selon l'une quelconque des revendications 1, 2 ou 6, dans lequel l'ajout d'au moins un point du contour (300, 400, 500) comprend :
l'ajout d'au moins un point au contour (300, 400, 500) à la position détectée de l'indicateur mobile.

8. Procédé selon l'une quelconque des revendications 5 ou 7, ledit procédé comprenant en outre :
le raccordement de l'au moins un point ajouté à un point sur le contour, lequel est la distance la plus courte du point ajouté.

9. Procédé de création d'un contour (300, 400, 500) comprenant une séquence de points à positionner sur une image, ledit procédé comprenant :
- la génération d'un premier événement d'interaction pour positionner dans l'image un point initial de la séquence,
- la mise en œuvre du procédé de modification d'un contour selon l'une quelconque des revendications précédentes, et
- la génération d'un deuxième événement d'interaction pour positionner un point final de la séquence dans l'image, ainsi, la finalisation du contour.

10. Produit de programme informatique comprenant un support lisible par ordinateur, ledit support lisible par ordinateur comportant un code lisible par ordinateur incorporé dans ledit support, le code lisible par ordinateur étant conçu de telle sorte que, lors de la mise en œuvre par un ordinateur ou par un processeur approprié, l'ordinateur ou le processeur est amené à mettre en œuvre le procédé selon l'une quelconque des revendications 1-9.

11. Appareil (100) de modification d'un contour (300, 400, 500) comprenant une séquence de points positionnés sur une image, ledit appareil comprenant :
un processeur (102) conçu pour :
détecter une position d'un indicateur mobile sur l'image par rapport à un ou plusieurs points de la séquence, dans laquelle l'indicateur mobile peut être déplacé par un utilisateur ;
supprimer automatiquement au moins un point du contour (300, 400, 500) ou pour ajouter au moins un point au contour (300, 400, 500), en fonction de la distance la plus courte entre la position détectée de l'indicateur mobile sur l'image et le ou les points ; et
basculer automatiquement entre la suppression d'au moins un point du contour (300, 400, 500) et l'ajout d'au moins un point au contour, en fonction de la distance la plus courte de la position détectée de l'indicateur mobile sur l'image à partir du ou des points ; dans laquelle la suppression d'au moins un point du contour (300, 400) ou l'ajout d'au moins un point au contour (300, 400) est basé sur le fait que la distance la plus courte dépasse une distance seuil,
au moins un point étant supprimé du contour (300, 400) où la distance la plus courte est égale ou inférieure à la distance seuil, et
dans laquelle la suppression d'au moins un point du contour comprend la suppression des points du contour, lesquels sont positionnés dans la séquence de points entre la position détectée de l'indicateur mobile et le point, lequel est la distance la plus courte de la position détectée de l'indicateur mobile.
